# EUROPÄISCHE PATENTSCHRIFT

(11) **EP 1 762 513 B1**
(45) Veröffentlichungstag und Bekanntmachung des Hinweises auf die Patenterteilung: **17.06.2009**
(21) Anmeldenummer: 06018606.1
(22) Anmeldetag: 05.09.2006
(51) Int. Cl.: B65G 47/71, B65G 47/68

(54) **Überschubstation an Behälterbehandlungsmaschinen**
Transfer station connected to machines for treating containers
Station de transfert à des machines de traitement de récipients

(30) Priorität: 13.09.2005 DE 102005043437
(43) Veröffentlichungstag der Anmeldung: 14.03.2007
(73) Patentinhaber: KHS AG, 44143 Dortmund (DE)
(72) Erfinder: Wiedemann, Ulrich, 44135 Dortmund (DE); Jendrichowski, Klaus, 59439 Holzwickede (DE)

(56) Entgegenhaltungen:
- DE-A1- 1 532 540
- DE-B- 1 105 298
- JP-A- 6 032 434
- US-A- 2 183 433
- US-A- 2 877 883

## Beschreibung

Die Erfindung bezieht sich auf eine Überschubstation an Behälterbehandlungsmaschinen /Flaschenreinigungsmaschinen und dergleichen gemäß dem Oberbegriff des Anspruchs 1 sowie auf ein Verfahren zum Zuführen solcher Behälter gemäß dem Oberbegriff des Anspruchs 10.

### Stand der Technik

Derartige Überschubstationen werden vorzugsweise an βehälterbehandlungsmaschinen wie Reinigungs- und/oder Sterilisationsmaschinen, Flaschenreinigungsmaschinen und dergleichen eingesetzt. Insbesondere bei Flaschenreinigungsmaschinen werden die zu reinigenden Flaschen in nebeneinander angeordneten Zellen aufgenommen und durch die einzelnen Behandlungs-, Vorweich- und Spritzstationen geführt. Hierzu ist es erforderlich, die einzelnen Flaschen vorzugsweise liegend in die in großer Zahl nebeneinander befindlichen Zellen einzuschieben. Eine derartige Überschubstation ist bereits aus US 2 183 433 bekannt.

Um eine entsprechende und auch ausreichende Anzahl von Flaschen ständig im Bereich der Überschubstation zur Verfügung zu halten, weist eine solche Überschubstation entsprechend der Zellenanzahl mehrere nebeneinander befindliche Zuförderreihen auf, in denen in Einschubrichtung gesehen, mehrere Flaschen hintereinander aufgestaut werden. Die jeweils den Zellenöffnungen nächstliegende vordere Flaschenreihe wird dann von mit mehreren Überschubnocken ausgestatteten Überschiebern im Bodenbereich untergriffen und längs einer zwischen den Zwischenstegen liegenden Flaschenführungsebene eines solchen Aufgabetischfeldes zu den daran vorbei geführten Flaschenzellen transportiert. Diese können in der eigentlichen Reinigungsmaschine kontinuierlich oder diskontinuierlich zu den einzelnen Behandlungsstationen geführt und nach dem Ende der Behandlung entsprechend umgekehrt aus der Maschine entlassen und abgeführt werden. Hochleistungsmaschinen arbeiten vorzugsweise kontinuierlich und erfordern einen entsprechend großen Flaschenzulauf. Zu diesem Zwecke ist ein quer oder unter einem Winkel vor der gesamten Überschubstation ausgerichteter Förderer vorgesehen, der seinerseits mehrere nebeneinander verlaufende Plattentransportbänder aufweist.

Als kritisch für eine störungsfreie Übergabe der Flaschen ist hierbei der unmittelbare Übergangsbereich zwischen dem quer verlaufenden Zuförderer und den lotrecht dazu verlaufenden kassettenartigen Zuführbahnen anzusehen. In diesem Bereich ist häufig ein stationäres Überleitblech angeordnet, welche beide Förderebenen miteinander verbindet und während des Überdrängelns der Flaschen zu den bekannten Gleitstörungen führt. Aber auch bei direkt bis hin zur Übergabe- oder Einreihposition geführten, beispielsweise bogenförmigen Förderern, entstehen unmittelbar vor den stirnseitigen Bereichen der die endgültigen Reihenabstände bestimmenden Zwischenstege erhöhte Drängelbereiche, die zu Einfädeistörungen oder umfallenden Flaschen mit der einhergehenden Lärmverursachung führen.

Man hat deshalb bereits bei derartigen Überschubstationen vorgeschlagen, ein zwischen den Förderern verlaufendes Überleitblech beweglich und relativ zu den darauf stehenden Flaschen quer zur vorgesehenen Überschubrichtung hin- und her verschiebbar zu lagern und mit einem Einweiserelement in Form eines gegen die Flaschen schlagenden Schwertes auszubilden (DE 40 10 646 A1). Hierbei führen alle zusammenwirkenden Elemente starre kreuzförmige Bewegungen zueinander aus, die zwar unter erhöhten Lärmbedingungen ein Verschieben der Flaschen mit einem Gegeneinanderschlagen mit erhöhter Drängelwirkung einleiten, aber ein gezieltes Einbringen der Flaschen in die Zuführpfade ausschließen.

### Aufgabe der Erfindung und deren Lösung

Unter Berücksichtigung der bekannten Ausgestaltungen und unter Vermeidung der aufgezeigten Nachteile liegt der Erfindung nun die Aufgabe zugrunde, eine Überschubstation der eingangs genannten Art so auszubilden, dass eine Verminderung der Drängelzonen bei gleichzeitiger Lärmreduzierung erzielt wird.

Die aufgabe wird mit der Überschubstation gemäß Anspruch 1 gelöst. Diese vorgeschlagene Lösung wird durch die weiteren Anspruchsmerkmale ergänzt und ausgestaltet.

Zur Lösung ist ferner ein Verfahren zum Zuführen von Behältern in Aufnahmezellen von Behälterreinigungsmaschinen mit einer Überschubstation gemäß den Vorrichtungsansprüchen vorgesehen, bei dem die Behälter von ihren außerhalb der von Zwischenstegen gebildeten Zuführpfaden befindlichen Standorten mittels mindestens teilweise an ihrem Außenmantel angreifenden Leit- und Lenkelementen in die Einlauf- und Einfädelungsposition verbringbar sind. Weitere Merkmale ergehen ferner aus den verbleibenden Verfahrensansprüchen.

Mit der vorgeschlagenen Lösung und auch in Verbindung mit den weiteren Ansprüchen wird eine optimale Einfädelung unter gleichzeitiger Minderung von sonst unvermeidbaren Anschlag- und Lärmimpulsen der zuzuführenden Flaschen bewirkt. Insbesondere werden die Flaschen unter einer gleitenden, lenkenden oder auch abrollenden Einfädelungsbewegung in die Zuführbahnen eingeschleust.

### Beschreibung

Im Nachfolgenden wird die Erfindung anhand eines Ausführungsbeispiels an einer Aufgabestation einer Flaschenreinigungsmaschine erläutert. Die Erfindung kann in entsprechend angepasster Ausführung auch an einer Flaschenabgabe einer Flaschenreinigungs- oder auch an anderen Flaschenbehandlungsmaschinen eingesetzt werden. In der Zeichnung zeigt:
Figur 1 eine Seitenansicht einer typischen Überschubstation,
Figur 2 den unmittelbaren Einfädelungsbereich einer Überschubstation
Figur 3 eine Anordnung von Einweisern als Rotationselemente und
Figur 4 einen vergrößerten Ausschnitt aus Figur 3

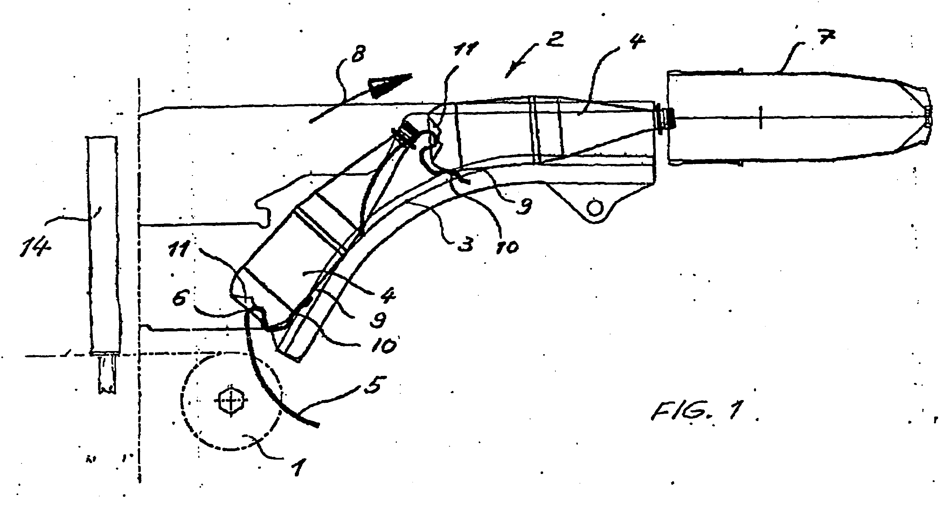

Gemäß dem in Figur 1 dargestellten Ausführungsbeispiel besteht die Übergabestation aus einem ortsfest angeordneten Zuförderer 1, der beispielsweise aus mehreren nebeneinander und auf geringem Abstand zueinander verlaufenden Plattenbandförderem bestehen kann und dem eigentlichen Aufgabetisch mit dem Aufgabefeld 2 mit einer eigenen Flaschenführungsebene 3, die vorzugsweise seitlich an den Flaschen 4 angreift und zwischen der ein rotierender Überschieber 5 mit Überschubnocken 6 umläuft, vorgelagert ist. An dem von dem Zuförderer 1 abweisenden Ende der Flaschenführungsebene 3 bewegen sich die eigentlichen Flaschenzellen 7 kontinuierlich oder diskontinuierlich und übernehmen die von dem Überschieber 5 bzw. seinem Überschubnocken 6 herangeführten Flaschen 4 zur weiteren Behandlung in der nicht weiter dargestellten Flaschenreinigungsmaschine. Das Aufgabetischfeld kann starr oder auch beweglich gelagert sein, An dem Überschieber 5 ist in Überschubrichtung 8 vor dem Überschubnocken 6 eine den Flaschenmantel 9 während des Überschubs untergreifende Abstützfläche 10 angeordnet. Diese liegt je nach Bewegungsablauf an unterschiedlichen Punkten des Flaschenmantels an und erlaubt so ein Untergreifen des Überschubnockens 6 auch bei Flaschen, die besondere Bodenausformungen 11 aufweisen.

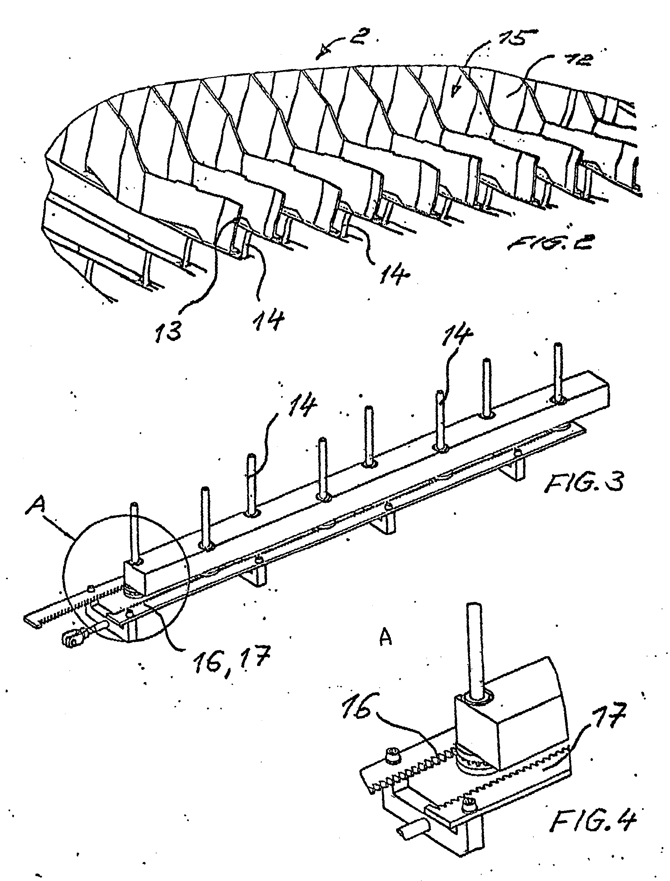

Wie aus Figur 2 ersichtlich, weist die Flaschenführungsebene 3 seitlich der Flaschen 4 angeordnete und die einzelnen Transportbahnen trennende Zwischenstege 12 auf, die in Einlaufrichtung vor ihren Stirnseiten 13 senkrecht aufgerichtete und gegen den Flaschen- oder Behältermantel anlegbare Einweiser 14 aufweisen, die jede während des Vorschubs daran anliegende Flaschen in die von den Zwischenstegen 12 gebildeten Kassetten oder Zuführpfade 15 hineinlenken oder je nach Position entsprechend hineinleitet. Zweckmäßig sind diese Einweiser 14 als vor den Stirnseiten 13 der Zwischenstege senkrecht ausgerichtete Rotationselemente 14 und zur optimalen Einweisung als schlanke Walzenkörper ausgebildet, deren Manteloberfläche zudem im Berührungsbereich mit den Flaschen oder Behältern 4 eine Lärm reduzierende Oberfläche aufweisen kann. Die Rotationseiemente 14 können auch als je nach auftretendem seitlichen Staudruck in wechselnde Drehrichtungen drehbar gelagerte Walzenkörper ausgeführt sein, wobei deren Mantel vorzugsweise der Außenkontur der einzufädelnden Flaschen 4 angepasst ist oder zu deren Manteloberfläche parallel verläuft. Als besonders vorteilhaft hat sich herausgestellt, dass die Rotationselemente 14 in unterschiedliche Drehrichtungen antreibbar, vorzugsweize gezielt antreibbar sind, wobei deren Drehzahl in Abhängigkeit von dem Staudruck, der jeweiligen Durchsatzleistung oder auch dem zu verarbeitenden Flaschenmaterial und der Flaschengröße individuell einregelbar ist. Die erforderlichen Antriebselemente 16 sind unterhalb der Behältertransportebene angebracht. Als besonders einfacher und zweckmäßiger Antrieb ist ein über eine Kurbel oder dergleichen angetriebener Zahnstangenantrieb 17 vorgesehen, mit dem gegebenenfalls zusätzlich mit einer vor- und zurückgehenden aktiven Zahnstangenbewegung unterschiedliche Drehrichtungen der Rotationselemente 14 erzeugt werden können und damit besonders vorteilhafte Einweisungen oder auch Ablenkungen der zuzuführenden Flaschen 4 erreicht werden.

Gemäß dem in den Ansprüchen beschriebenen Verfahren werden die Behälter oder Flaschen 4 von ihren Standorten außerhalb der von den Zwischenstegen 12 gebildeten Kassetten oder Zuführpfade 15 mittels mindestens an optimaler Position des Außenmantels angreifenden Leit- oder Lenkelementen, Einweisem oder Rotationselementen 14 in die Einlauf-und Einfädelungsposition verbracht. Dabei werden die Behälter 4 vorzugsweise zur Einweisung in die Zuführpfade 15 in Rotation verbracht und um ihre Hochachse drehend oder an den Rotationselementen abrollend in die Zuführpfade 15 eingeführt. Hierbei kann unmittelbar vor den Zwischenstegen 12 eine Zwangsführung der Flaschen/Behälter 4 vorgesehen sein.

## Patentansprüche

1. Überschubstation an Behälterbehandlungsmaschinen und dergleichen mit einem breiten, aus mehreren nebeneinander angeordneten Transportbahnen (1) bestehenden Aufgabefeld (2) zum Zuführen der Behälter (4) in die Übernahmeeinrichtungen (7) der Behandlungsmaschine und einem Förderer, der quer oder in einem Winkel zur eigentlichen Überschubrichtung (8) verläuft und zum Zu- bzw. Abführen der zu behandelnden Behälter dient, mit einem Übergangsbereich zu den Transportbahnen des Auf- oder Abgabefeldes (2) sowie diese Transportbahnen trennende Zwischenstege (12), wobei in Einlaufrichtung vor den Stirnseiten (13) der Zwischenstege (12) senkrecht ausgerichtete und gegen den Behältermantel anlegbare und diesen lenkende oder leitende Rotationselemente (14) angeordnet sind, **dadurch gekennzeichnet, dass** die Rotationselemente (14) in unterschiedliche Drehrichtungen antreibbar sind.

2. Überschubstation nach einem der vorhergehenden Ansprüche, **dadurch gekennzeichnet, dass** die Rotationselemente (14) als schlanke Walzenkörper ausgebildet sind

3. Überschubstation nach einem der vorhergehenden Ansprüche, **dadurch gekennzeichnet, dass** die Rotationselemente (14) als auf einer lotrechten Welle je nach auftretendem Staudruck in wechselnde Drehrichtungen drehbar gelagerte Walzenkörper bestehen.

4. Überschubstation nach einem der vorhergehenden Ansprüche, **dadurch gekennzeichnet, dass** die Rotationselemente (14) mindestens im Berührungsbereich mit den Behältern (4) eine Lärm reduzierende Oberfläche aufweisen.

5. Überschubstation nach einem der vorhergehenden Ansprüche, **dadurch gekennzeichnet, dass** die Rotationselemente (14) antreibbar gelagert sind.

6. Überschubstation nach einem der vorhergehenden Ansprüche, **dadurch gekennzeichnet, dass** die Achsen der Rotationselemente (14) von unterhalb der Behältertransportebene gelagerten Antriebeinrichtungen (16) antreibbar sind.

7. Überschubstation nach einem der vorhergehenden Ansprüche, **dadurch gekennzeichnet, dass** die Rotationselemente (14) mittels eines Zahnstangentriebs (17) drehbar sind.

8. Überschubstation nach einem der vorhergehenden Ansprüche, **dadurch gekennzeichnet, dass** mehrere nebeneinander und auf Abstand zueinander angeordnete Rotationselemente (14) gemeinsam antreibbar sind.

9. Überschubstation nach einem der vorhergehenden Ansprüche, **dadurch gekennzeichnet, dass** die Rotationselemente (14) mit dem zugeordneten Antrieb als Baugruppeneinheit (18) zusammengefasst sind.

10. Verfahren zum Zuführen von Behältern in Aufnahmezellen von Behälterreinigungsmaschinen mit einer Übergabestation gemäß ein der vorhergehenden Ansprüche, **dadurch gekennzeichnet, dass** die Behälter (4) von ihren außerhalb der von Zwischenstegen (12) gebildeten Zuführpfaden (15) befindlichen Standorten mittels mindestens teilweise an ihrem Außenmantel angreifenden Leit- und Lenkelementen in die Einlauf- und Einfädelungsposition verbringbar sind.

11. Verfahren zum Zuführen nach Anspruch 10, **dadurch gekennzeichnet, dass** die Behälter (4) im Bereich der oder vor den eigentlichen Zuführpfaden (15) zur Einweisung in diese in Rotation verbringbar sind.

12. Verfahren nach einem der Ansprüche 10 oder 11, **dadurch gekennzeichnet, dass** die Behälter (4) um ihre Hochachse rollend in die Zuführpfade einführbar sind.

13. Verfahren nach einem der Ansprüche 10, 11 oder 12, **dadurch gekennzeichnet, dass** die Behälter (4) unmittelbar vor den ortsfesten Zwischenstegen (12) zwangsgelenkt eingeführt werden.

## Claims

1. Transfer station to machines for treating containers and the like having a wide feeding field (2) comprising a plurality of conveyor belts (1) arranged next to one another for conveying the containers (4) into the transfer devices (7) of the treatment machine and a conveyor which runs transversely or at an angle to the actual transfer direction (8) and acts to convey and remove the containers to be treated, having a transition region to the conveyor belts of the feeding or discharge field (2) and intermediate webs (12) separating these conveyor belts, whereby rotational elements (14) are arranged so as to be oriented perpendicularly in the run-in direction in front of the faces (13) of the intermediate webs (12) and to bear against the container casing and to steer or guide said container casing, **characterised in that** the rotational elements (14) can be driven in different rotational directions.

2. Transfer station according to one of the preceding claims, **characterised in that** the rotational elements (14) are embodied as slim roll bodies.

3. Transfer station according to one of the preceding claims, **characterised in that** the rotational elements (14) comprise roll bodies rotatably mounted on a vertical shaft in alternating rotational directions according to the ram pressure which occurs.

4. Transfer station according to one of the preceding claims, **characterised in that** the rotational elements (14) have a noise-reducing surface at least in the contact region with the containers (4).

5. Transfer station according to one of the preceding claims, **characterised in that** the rotational elements (14) are mounted so as to be drivable.

6. Transfer station according to one of the preceding claims, **characterised in that** the axles of the rotational elements (14) can be driven by drive devices (16) mounted below the container transport plane.

7. Transfer station according to one of the preceding claims, **characterised in that** the rotational elements (14) are rotatable by means of a toothed rack driver (17).

8. Transfer station according to one of the preceding claims, **characterised in that** a plurality of rotational elements (14) arranged next to one another and at a distance to one another can be jointly driven.

9. Transfer station according to one of the preceding claims, **characterised in that** the rotational elements (14) are amalgamated with the assigned drive as an assembly unit (18).

10. Method for conveying containers in receiving cells of machines for cleaning containers having a transfer station according to one of the preceding claims, **characterised in that** the containers (4) can be moved to the run-in and threading position from their locations located outside the conveyance paths (15) formed by intermediate webs (12) by means of guide and steering elements which engage at least partially on their outer casing.

11. Method for conveying according to Claim 10, **characterised in that** the containers (4) can be rotated in the region of the or in front of the actual conveyance paths (15) for introduction into these.

12. Method according to one of Claims 10 or 11, **characterised in that** the containers (4), rolling about their vertical axis, can be introduced into the conveyance paths.

13. Method according to one of Claims 10, 11 or 12, **characterised in that** the containers (4) are introduced with automatic steering directly in front of the positionally fixed intermediate webs (12).

## Revendications

1. Station de transfert à des machines de traitement de récipients et similaires avec un large champ de chargement (2) se composant de plusieurs voies de transport (1) disposées les unes à côté des autres pour l'amenée des récipients (4) dans les dispositifs de prise en charge (7) de la machine de traitement et un convoyeur qui s'étend transversalement ou selon un angle par rapport au sens réel de transfert (8) et sert à amener ou à évacuer les récipients à traiter, avec une zone de transition aux voies de transport du champ de chargement ou de déchargement (2) ainsi qu'aux traverses intermédiaires (12) séparant ces voies de transport, des éléments de rotation (14) guidant ou dirigeant celles-ci et pouvant reposer contre l'enveloppe de récipient et orientés perpendiculairement aux traverses intermédiaires (12) étant disposés dans le sens d'admission avant les côtés frontaux (13), **caractérisée en ce que** les éléments de rotation (14) peuvent être entraînés dans différents sens de rotation.

2. Station de transfert selon l'une quelconque des revendications précédentes, **caractérisée en ce que** les éléments de rotation (14) sont réalisés comme des corps de roulement minces.

3. Station de transfert selon l'une quelconque des revendications précédentes, **caractérisée en ce que** les éléments de rotation (14) se composent de corps de roulement logés à rotation sur un arbre vertical selon la pression dynamique survenant dans des sens de rotation alternants.

4. Station de transfert selon l'une quelconque des revendications précédentes, **caractérisée en ce que** les éléments de rotation (14) présentent au moins dans la zone de contact avec les récipients (4) une surface réduisant le bruit.

5. Station de transfert selon l'une quelconque des revendications précédentes, **caractérisée en ce que** les éléments de rotation (14) sont logés de manière entraînable.

6. Station de transfert selon l'une quelconque des revendications précédentes, **caractérisée en ce que** les axes des éléments de rotation (14) peuvent être entraînés par des dispositifs d'entraînement (16) logés au-dessous du plan de transport de récipient.

7. Station de transfert selon l'une quelconque des revendications précédentes, **caractérisée en ce que** les éléments de rotation (14) sont rotatifs au moyen d'un engrenage de crémaillère (17).

8. Station de transfert selon l'une quelconque des revendications précédentes, **caractérisée en ce que** plusieurs éléments de rotation (14) disposés les uns à côté des autres et à distance les uns par rapport aux autres peuvent être entraînés conjointement.

9. Station de transfert selon l'une quelconque des revendications précédentes, **caractérisée en ce que** les éléments de rotation (14) sont rassemblés avec l'entraînement associé en tant qu'une unité modulaire (18).

10. Procédé d'amenée de récipients dans des cellules de réception de machines de nettoyage de récipient avec une station de transfert selon l'une quelconque des revendications précédentes, **caractérisé en ce que** les récipients (4) peuvent être amenés de leurs positions se trouvant en dehors des voies d'amenée (15) formées par des traverses intermédiaires (12) au moyen d'éléments de guidage et de direction engageant au moins partiellement leur enveloppe extérieure dans la position d'admission et d'enfilage.

11. Procédé d'amenée selon la revendication 10, **caractérisé en ce que** les récipients (4) peuvent être amenés en rotation dans la zone des ou avant les voies d'amenée (15) réelles à des fins d'initiation dans celles-ci.

12. Procédé selon l'une quelconque des revendications 10 ou 11, **caractérisé en ce que** les récipients (4) peuvent être introduits dans les voies d'amenée, roulant autour de leur axe vertical.

13. Procédé selon l'une quelconque des revendications 10, 11 ou 12, **caractérisé en ce que** les récipients (4) sont introduits à guidage forcé juste avant les traverses intermédiaires (12) fixes.
